(19) Europäisches Patentamt / European Patent Office / Office européen des brevets

(11) **EP 4 496 034 A1**

(12) **EUROPEAN PATENT APPLICATION**
published in accordance with Art. 153(4) EPC

(43) Date of publication:
 **22.01.2025 Bulletin 2025/04**

(21) Application number: **23779866.5**

(22) Date of filing: **20.03.2023**

(51) International Patent Classification (IPC):
 *H01M 4/58* (2010.01)  *H01G 11/50* (2013.01)
 *H01M 4/36* (2006.01)

(52) Cooperative Patent Classification (CPC):
 **H01G 11/50; H01M 4/36; H01M 4/58;** Y02E 60/10

(86) International application number:
 **PCT/JP2023/010988**

(87) International publication number:
 **WO 2023/189850 (05.10.2023 Gazette 2023/40)**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **KH MA MD TN**

(30) Priority: **31.03.2022 JP 2022061319**

(71) Applicant: **SUMITOMO RUBBER INDUSTRIES, LTD.**
 **Kobe-shi, Hyogo 651-0072 (JP)**

(72) Inventors:
 • **CHUJO, Fumiya**
  **Kobe-shi, Hyogo 651-0072 (JP)**
 • **KUBO, Tatsuya**
  **Kobe-shi, Hyogo 651-0072 (JP)**

(74) Representative: **Manitz Finsterwald Patent- und Rechtsanwaltspartnerschaft mbB Martin-Greif-Strasse 1 80336 München (DE)**

(54) **SULFUR-BASED ACTIVE MATERIAL, ELECTRODE, LITHIUM ION SECONDARY BATTERY AND PRODUCTION METHOD**

(57) It is an object of the present invention to improve a volumetric energy density while maintaining a capacity retention rate of an active material that constitutes an electrode of a lithium-ion secondary battery. Provided is a method of producing a sulfur-based active material, the method comprising the steps of: (1) mixing an acrylic resin, sulfur, and an iron compound comprising a divalent or trivalent iron ion to obtain a raw material; and (2) baking the raw material; wherein the iron compound has a median diameter of 12.00 μm or less.

**Description**

TECHNICAL FIELD

The present invention relates to a novel sulfur-based active material, an electrode comprising the sulfur-based active material, a lithium-ion secondary battery comprising the electrode, and producing methods thereof.

BACKGROUND ART

The lithium-ion secondary battery has been mainly used as a battery for portable electronic device because of its large charge and discharge capacity. In addition, the lithium-ion secondary battery has been used more and more as a battery for electric vehicle as well, and expected to have improved performance.
Patent Document 1 describes a sulfur-based active material obtained by baking a raw material comprising a polymer, which comprises methacrylonitrile as a monomer component, and sulfur.
On the other hand, as negative electrode active materials, it has been proposed to use materials that can absorb and release more lithium ions, such as silicon (Si), tin (Sn), and the like in order to increase battery capacity of lithium-ion secondary battery.

PRIOR ART DOCUMENT

Patent Document

Patent Document 1: JP 2020-167144 A

SUMMARY OF THE INVENTION

PROBLEM TO BE SOLVED BY THE INVENTION

However, an active material using a polymer as in Patent Document 1 tends to have decreased true density, and therefore, even if charge and discharge capacity per unit mass is large, it tends to become inferior when compared to charge and discharge capacity per unit volume (volumetric energy density).
Moreover, the above-described materials that have been proposed as the negative electrode active materials undergo a large change in volume by absorption and release of lithium ions, and thus they have a problem of poor cycle characteristics when charging and discharging are repeated. Although carbon materials such as graphite, hard carbon, and the like are also used, their capacity have almost reached their theoretical limit and it cannot be expected to increase their capacity significantly.
It is an object of the present invention to provide a novel sulfur-based active material having a good volumetric energy density while maintaining a capacity retention rate, an electrode comprising the sulfur-based active material, that is, a positive electrode or a negative electrode, and a lithium-ion secondary battery comprising the electrode, and producing methods thereof.

MEANS TO SOLVE THE PROBLEM

The present invention relates to a method of producing a sulfur-based active material, the method comprising the steps of:

  (1) mixing an acrylic resin, sulfur, and an iron compound comprising a divalent or trivalent iron ion to obtain a raw material; and
  (2) baking the raw material;

wherein the iron compound has a median diameter of 12.00 $\mu$m or less.

EFFECT OF THE INVENTION

According to the present invention, a novel sulfur-based active material having a good volume energy density while maintaining a capacity retention rate, an electrode comprising the sulfur-based active material, that is, a positive electrode or a negative electrode, and a lithium-ion secondary battery comprising the electrode, and producing methods thereof can be provided.

In the present specification, the term "cycle characteristics" refers to characteristics in which charge and discharge capacity of a secondary battery is maintained despite repeated charging/discharging. Therefore, as charging and discharging are repeated, a secondary battery with a high degree of decrease in charge and discharge capacity and a low capacity retention rate has poor cycle characteristics, while, on the contrary, a secondary battery with a low degree of decrease in charge and discharge capacity and a high capacity retention rate has excellent cycle characteristics.

BRIEF DESCRIPTION OF THE DRAWINGS

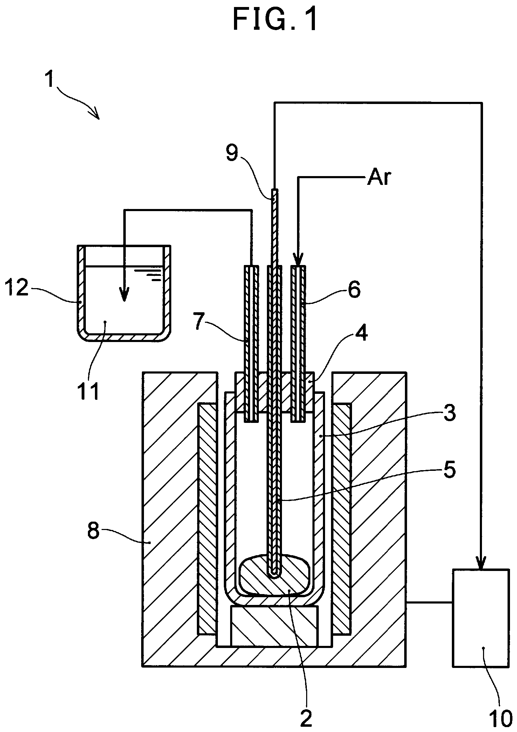

FIG. 1 is a cross-sectional view schematically showing a reaction device used for producing a sulfur-based active material in Examples of the present invention.

EMBODIMENT FOR CARRYING OUT THE INVENTION

The present invention will be described in detail as follows. Besides, numerical values of upper limits and lower limits relating to "or more", "or less", "greater than", "less than", etc. for descriptions of numerical ranges are numerical values that can be arbitrarily combined, and numerical values in Examples can also be these upper limits and/or the lower limits. Moreover, a numerical range shown to include lower limits or upper limits is interpreted as simultaneously disclosing a numerical range not including the upper limits or the lower limits, unless contrary to the purpose of the present invention, and conversely, a numerical range shown not to include lower limits or upper limits is interpreted as simultaneously disclosing a numerical range including the lower limits or the upper limits, unless contrary to the purpose of the present invention.

One embodiment of the present invention is a method of producing a sulfur-based active material, the method comprising the steps of: (1) mixing an acrylic resin, sulfur, and an iron compound comprising a divalent or trivalent iron ion to obtain a raw material; and (2) baking the raw material; wherein the iron compound has a median diameter of 12.00 $\mu$m or less.

In the producing method of the present invention, by reducing the median diameter of the iron compound, a sulfur-based active material having a good volume energy density can be obtained while maintaining a capacity retention rate.

A content of the iron compound comprising a divalent or trivalent iron ion in the raw material is preferably 50 parts by mass or more and 300 parts by mass or less based on 100 parts by mass of the acrylic resin.

The step (1) preferably comprises the substeps of: (1-a-1) adding the acrylic resin and the iron compound comprising a divalent or trivalent iron ion to an organic solvent and mixing them to obtain a liquid mixture; (1-a-2) removing the organic solvent from the liquid mixture to obtain a dry mixture; and (1-a-3) mixing the dry mixture and the sulfur.

The step (1) preferably comprises the substep of: (1-b) mixing the acrylic resin, the sulfur, and the iron compound comprising a divalent or trivalent iron ion in powder state.

The baking temperature in the step (2) is preferably higher than 250°C and lower than 550°C.

The baking temperature in the step (2) is preferably higher than the temperature at which the iron compound comprising a divalent or trivalent iron ion thermally decomposes.

A content of the sulfur in the raw material is preferably greater than 50 parts by mass and less than 1000 parts by mass based on 100 parts by mass of the acrylic resin.

The acrylic resin is preferably at least one polymer selected from the group consisting of: a polymer obtained by polymerizing at least one monomer selected from the group consisting of acrylate compounds represented by the following formula (1); or a polymer obtained by polymerizing at least one monomer selected from the group consisting of acrylate compounds represented by the above-described formula (1) and at least one monomer selected from the group consisting of diacrylate compounds represented by the above-described formula (2).

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO-Y-OCO(R^{22})C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom provided that when there are two or more of the ether bonds, any adjacent oxygen atoms always have two or more intervening carbon atoms between them.)

It is preferable that $R^{12}$ is an alkyl group having 1 or more and 6 or less carbon atoms, Y is a linear hydrocarbylene group having 2 or more and 6 or less carbon atoms, and in the hydrocarbylene group, the number of substituents is 1 or more and 4 or less, the number of carbon atoms of the alkyl group that is a substituent is 1 or more and 4 or less, and the number of ether bonds which the carbon skeleton constituting the hydrocarbylene group has is 1 or more and 2 or less.

Another embodiment of the present invention is a method of producing an electrode, the method further comprising, after producing a sulfur-based active material by the method of producing a sulfur-based active material, the step of (3) producing an electrode using the sulfur-based active material by a conventional method.

Another embodiment of the present invention is a method of producing a lithium-ion secondary battery, the method further comprising, after producing an electrode by the method of producing an electrode, the method of (4) producing a lithium-ion secondary battery using the sulfur-based active material by a conventional method.

Another embodiment of the present invention is a sulfur-based active material, the sulfur-based active material being obtained by baking a raw material comprising an acrylic resin, sulfur, and an iron compound comprising a divalent or trivalent iron ion, the sulfur-based active material at least comprising carbon, sulfur, and iron as constituent elements, wherein the iron compound has a median diameter of 12.00 $\mu$m or less, wherein the sulfur-based active material comprises iron disulfide, and wherein a content of the sulfur as a constituent element is 40.0% by mass or more.

In X-ray diffraction measurement using CuK$\alpha$ ray, the sulfur-based active material preferably has 0.20° or more of a half-value width of a peak showing the maximum diffraction intensity within a range of 2$\theta$=33.04° ($\pm$1.0°).

The sulfur-based active material preferably has a true density of greater than 2.4 g/cm$^3$ and less than 3.6 g/cm$^3$.

In the sulfur-based active material, a content of the carbon is preferably greater than 5.0% by mass and less than 30.0% by mass.

The sulfur-based active material preferably has a respective peak in each range of 2$\theta$=25.5° ($\pm$1.0°), 28.51° ($\pm$1.0°), 33.04° ($\pm$1.0°), 37.07° ($\pm$1.0°), 40.76° ($\pm$1.0°), 47.42° ($\pm$1.0°), and 56.27° ($\pm$1.0°), in X-ray diffraction measurement using CuK$\alpha$ ray.

The acrylic resin is preferably at least one polymer selected from the group consisting of: a polymer obtained by polymerizing at least one monomer selected from the group consisting of acrylate compounds represented by the above-described formula (1); or a polymer obtained by polymerizing at least one monomer selected from the group consisting of acrylate compounds represented by the above-described formula (1) and at least one monomer selected from the group consisting of diacrylate compounds represented by the above-described formula (2).

It is preferable that R$^{12}$ is an alkyl group having 1 or more and 6 or less carbon atoms, Y is a linear hydrocarbylene group having 2 or more and 6 or less carbon atoms, and in the hydrocarbylene group, the number of substituents is 1 or more and 4 or less, the number of carbon atoms of the alkyl group that is a substituent is 1 or more and 4 or less, and the number of ether bonds which the carbon skeleton constituting the hydrocarbylene group has is 1 or more and 2 or less.

The sulfur-based active material preferably has a median diameter of 1 $\mu$m or more and 40 $\mu$m or less.

The content of the iron compound comprising a divalent or trivalent iron ion and the content of the sulfur in the raw material are 50 parts by mass or more and 300 parts by mass or less and greater than 50 parts by mass and less than 1000 parts by mass, based on 100 parts by mass of the acrylic resin, respectively.

<Raw material>

(Acrylic resin)

In the present invention, the acrylic resin is at least one polymer selected from the group consisting of: a polymer obtained by polymerizing at least one monomer selected from the group consisting of acrylate compounds represented by the following formula (1); or a polymer obtained by polymerizing at least one monomer selected from the group consisting of acrylate compounds represented by the following formula (1) and at least one monomer selected from the group consisting of diacrylate compounds represented by the following formula (2).

$$CH_2=C\,(R^{11})\,COOR^{12} \qquad (1)$$

(wherein, R$^{11}$ is a hydrogen atom or a methyl group, and R$^{12}$ is an alkyl group.)

$$CH_2=C\,(R^{21})COO\text{-}Y\text{-}OCO(R^{22})\,C=CH_2 \qquad (2)$$

(wherein R$^{21}$ and R$^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom provided that when there are two or more of the ether bonds, any adjacent oxygen atoms always have two or more intervening carbon atoms between them.)

In the formula (1), R$^{11}$ is preferably a methyl group, and R$^{12}$ is preferably an alkyl group having 1 or more and 6 or less carbon atoms, more preferably an alkyl group having 1 or more and 4 or less carbon atoms, and among them, more preferably a methyl group, n-butyl, i-butyl, or t-butyl group. Examples of the compound represented by the formula (1) include, for example, methyl (meth)acrylate, butyl (meth)acrylate, and the like, more preferably methyl methacrylate and butyl methacrylate. Here, "(meth)acrylate" of methyl (meth)acrylate and butyl (meth)acrylate represents either "acrylate" or "methacrylate" (the same shall apply hereinafter). A further preferred example of the compound represented by the formula (1) is butyl methacrylate.

In the formula (2), both $R^{21}$ and $R^{22}$ are preferably methyl groups. The number of carbon atoms in the hydrocarbylene group (straight chain) of Y is preferably 2 or more and 6 or less, more preferably 2 or 3. The number of substituents in Y is preferably 1 or more and 4 or less, more preferably 1 or 2. As the substituents in Y, one or more substituents selected from the group consisting of a hydroxyl group and an alkyl group having 1 or more and 4 or less carbon atoms are preferable, and as the alkyl group having 1 or more and 4 or less carbon atoms, a methyl group is preferable. When the carbon skeleton of Y has an ether bond formed by an oxygen atom, for example, a moiety corresponding to -Y-O- is preferably represented by the following formula (3) (provided that no substituent in Y is considered in the formula (3)).

$$-(CH_2)_l-(CH_2CH_2O)_m-(CH_2CH_2CH_2O)_n- \qquad (3)$$

(wherein l is 0 or more and 6 or less, m is 0 or more and 3 or less, and n is 0 or more and 2 or less. However, l, m, and n cannot be 0 at the same time.)

In the formula (3), it is preferable that l is 1, 2, 3, 4, 5, or 6, and m and n are 0; m is 1, 2, or 3, and l and n are 0; or n is 1 or 2 and l and m are 0.

Examples of the compound represented by the formula (2) include, for example, ethylene glycol di(meth) acrylate, diethylene glycol di(meth)acrylate, triethylene glycol di(meth)acrylate, 1,6-hexanediol di(meth)acrylate, neopentine glycol di(meth)acrylate, glycerin di(meth)acrylate, and the like. Among them, ethylene glycol dimethacrylate is preferable.

Preferred examples of the acrylic resin include a homopolymer of methyl (meth)acrylate, a homopolymer of butyl (meth)acrylate, a copolymer of methyl (meth)acrylate and ethylene glycol di(meth)acrylate, a copolymer of butyl (meth) acrylate and ethylene glycol di(meth)acrylate, and the like. Among them, as the acrylic resin, an acrylic resin of methacrylate type is preferable. More preferred examples of the acrylic resin include a copolymer of butyl methacrylate and ethylene glycol dimethacrylate.

One or more kinds of acrylic resins can be used.

[Form of acrylic resin]

In the present invention, the acrylic resin is preferably in a form of a fine particle. Here, the fine particle refers to a particle having a particle size of 300.0 μm or less. The particle size is preferably 270.0 μm or less, more preferably 200.0 μm or less, further preferably 100.0 μm or less, further preferably 50.0 μm or less, further preferably 20.0 μm or less, further preferably 15.0 μm or less, further preferably 13.0 μm or less, further preferably 10.0 μm or less, further preferably 6.0 μm or less. On the other hand, a lower limit of the particle size is, but not particularly limited to, usually, for example, 0.1 μm or more, preferably 1.0 μm or more. The particle size is a value (median diameter) measured by a precision particle size distribution measuring device, Multisizer 3, manufactured by Beckman Coulter, Inc.

The acrylic resin may be a spherical fine particle or a porous fine particle. When the acrylic resin is porous, its oil absorption amount is preferably 100 mL/100 g or more, more preferably 110 mL/100 g or more, further preferably 120 mL/100 g or more, further preferably 130 mL/100 g or more, further preferably 140 mL/100 g or more. The oil absorption amount is a value measured according to JIS K 5101-13-2:2004. More specifically, it can be measured by the method described in Paragraph 0069 of JP 2017-88501 A.

[Weight-average molecular weight (Mw) of acrylic resin]

A Mw of the acrylic resin is not particularly limited as long as it has the above-described structure. However, the Mw of the acrylic resin is usually in a range of greater than 2000 and less than 1500000. The Mw is a value measured by gel permeation chromatography (GPC) (calibrated with polystyrene).

[Availability or production of acrylic resin]

The acrylic resin is commercially available or can be produced by a conventional method within the purview of knowledge of those skilled in the art. Examples of the commercially available acrylic resin include, for example, those manufactured by Sekisui Kasei Co., Ltd.

(Sulfur)

As sulfur, any of those in various forms such as a powdered sulfur, an insoluble sulfur, a precipitated sulfur, a colloidal sulfur, and the like can be used. Among them, a precipitated sulfur and a colloidal sulfur are preferable.

A content of the sulfur is preferably greater than 50 parts by mass, more preferably greater than 100 parts by mass, further preferably greater than 300 parts by mass, further preferably greater than 400 parts by mass, further preferably greater than 500 parts by mass, based on 100 parts by mass of the acrylic resin. When the content is greater than 50 parts by mass, there is a tendency that charge and discharge capacity and cycle characteristics can be improved. On the other hand, there is no upper limit of the content of the sulfur, but it is usually preferably less than 1000 parts by mass, more preferably less than 900 parts by mass, further preferably less than 800 parts by mass, further preferably less than 700 parts by mass. When the content is 1000 parts by mass or less, there is a tendency to be advantageous in terms of cost.

As sulfur, any of various allotropes can be used, but those comprising S8 sulfur which is solid at normal temperature and pressure are preferable, and S8 sulfur alone is more preferable.

(Iron compound comprising a divalent or trivalent iron ion)

The iron compound comprising a divalent or trivalent iron ion is not particularly limited as long as it decomposes during baking and reacts with sulfur to generate iron disulfide, and a variety of such iron compounds can be used. Examples of such iron compounds include an iron acid salt, an iron complex, and the like. Examples of the iron acid salt include both an organic acid salt of iron and an inorganic acid salt of iron. On the other hand, examples of the iron complex include a neutral iron complex and an iron complex ion salt (iron complex salt).

Examples of the organic acid salt of iron include, for example, a salt of divalent iron ($Fe^{2+}$) and organic acid, a salt of trivalent iron ($Fe^{3+}$) and organic acid, and the like. Among them, a salt of divalent iron and organic acid is preferable. The organic acid is, but not particularly limited to, one having a carboxyl group (-COOH), one having a sulfo group (-SO$_3$H), or the like. Among them, one having a carboxyl group is preferable. Specific examples of the organic acid include fatty acid, oxalic acid, tartaric acid, citric acid, malic acid, succinic acid, and the like. Specific examples of fatty acid include, for example, those having 1 or more and 6 or less carbon atoms such as acetic acid, propionic acid, butyric acid, and the like. Among them, acetic acid, oxalic acid, and the like are preferable. Preferred examples of the organic acid salt of iron include iron (II) acetate, iron (II) oxalate, and the like. They may be hydrates. One or more kinds of organic acid salts of iron can be used.

Examples of the inorganic acid salt of iron include, for example, a salt of divalent iron ($Fe^{2+}$) and inorganic acid, a salt of trivalent iron ($Fe^{3+}$) and inorganic acid, and the like. Specific examples of the inorganic acid include hydrochloric acid, sulfuric acid, nitric acid, and the like. Among them, nitric acid and the like are preferable. Preferred examples of the inorganic acid salt of iron include iron (II) chloride, iron (III) chloride, iron (II) sulfate, iron (III) sulfate, iron (II) nitrate, iron (III) nitrate, and the like. They may be hydrates. One or more kinds of inorganic acid salts of iron can be used.

Examples of the iron complex include, for example, a divalent iron ($Fe^{2+}$) complex, a trivalent iron ($Fe^{3+}$) complex, and the like. The iron complex may be in a form of a neutral complex or in a form of a complex salt. A ligand that coordinates to the iron ion is not particularly limited, examples of which include, for example, halogen atoms such as a chlorine atom, a bromine atom, and the like, a cyano group, a dicyclopentadienyl group, N,N'-bis(salicylidene)ethylenediamine, and the like. Examples of the iron complex include, for example, potassium hexacyanidoferrate(II) ([Fe(CN)$_6$]K$_4$), potassium hexacyanidoferrate(III) ([Fe(CN)$_6$]K$_3$), sodium iron(III) chloride ([FeCl$_4$]Na), dicyclopentadienyl iron(II) (ferrocene), N,N'-bis(salicylidene)ethylene diaminato iron(III) chloride, and the like. One or more kinds of iron complexes can be used.

As the iron compound comprising a divalent or trivalent iron ion, at least one selected from the group consisting of the above-described organic acid salt of iron, inorganic acid salt of iron, neutral iron complex, and iron complex salt can be used. Among them, the organic acid salt of iron, the inorganic acid salt of iron, or the neutral iron complex is preferable.

A median diameter (D50) of the iron compound comprising a divalent or trivalent iron ion is 12.00 μm or less. The median diameter is preferably 10.00 μm or less, more preferably 8.00 μm or less, further preferably 6.00 μm or less, further preferably 5.00 μm or less, further preferably 4.50 μm or less, further preferably 4.30 μm or less, further preferably 4.29 μm or less, further preferably 4.00 μm or less, further preferably 3.00 μm or less. On the other hand, a lower limit of the median diameter is not particularly limited, but it is usually about 0.10 μm or more, and may be about 1.00 μm or about 2.00 μm. The median diameter can be measured by a method described in Examples section below.

A specific surface area of the iron compound comprising a divalent or trivalent iron ion is preferably 1.0 m$^2$/g or more, more preferably 2.0 m$^2$/g or more, further preferably 2.5 m$^2$/g or more, further preferably 2.8 m$^2$/g or more, further preferably 3.0 m$^2$/g or more, further preferably 4.0 m$^2$/g or more, further preferably 4.2 m$^2$/g or more, further preferably 4.5 m$^2$/g or more. On the other hand, an upper limit of the specific surface area is not particularly limited, but it is usually about 40.0 m$^2$/g or less, and may be about 20.0 m$^2$/g or less or about 10.0 m$^2$/g or less. The specific surface area can be measured by a Full Automatic Surface Area Analyzer, Macsorb (HM-model 1201, manufactured by MOUNTECH Co., Ltd.).

The iron compound having a median diameter of 12.00 $\mu$m or less can be prepared by a conventional method, for example, by pulverizing an iron compound with a pulverizer. As such a pulverizer, for example, one manufactured by Japan Analytical Industry Co., Ltd. (e.g., JFC-2000, etc.), one manufactured by Labonect (e.g., Free Speed Mill FS-20, etc.), or one manufactured by Aishin Nano Technologies CO., LTD (e.g., Nano Jetmizer NJ-30, etc.) can be used.

A content of the iron compound comprising a divalent or trivalent iron ion is preferably 50 parts by mass or more and 300 parts by mass or less based on 100 parts by mass of the acrylic resin, from the viewpoint of effects of the present invention. The content is more preferably greater than 50 parts by mass, further preferably greater than 60 parts by mass, further preferably greater than 70 parts by mass, further preferably greater than 75 parts by mass. On the other hand, the content is more preferably less than 250 parts by mass, further preferably less than 200 parts by mass, further preferably less than 150 parts by mass, further preferably 100 parts by mass or less.

(Conductive carbon material)

The raw material may comprise a conductive carbon material. This is because that it can improve conductivity of the sulfur-based active material. As such a conductive carbon material, a carbon material having a graphite structure is preferable. As the carbon material, those having a condensed aromatic ring structure such as, for example, carbon black, acetylene black, ketjen black, graphite, a carbon nanotube (CNT), a carbon fiber (CF), graphene, fullerene, and the like can be used. One or more kinds of conductive carbon materials can be used.

Among them, acetylene black, carbon black, and ketjen black are preferable because they are inexpensive and excellent in dispersibility. Moreover, a small amount of a CNT, graphene, or the like may be used in combination with acetylene black, carbon black, or ketjen black. Such a combined system makes it possible to further improve cycle characteristics of the lithium-ion secondary battery without significantly increasing the cost. Besides, the combined amount of the CNT or graphene is preferably 8% by mass or more and 12% by mass or less of a total amount of the conductive carbon material.

A content of the conductive carbon material is preferably 5 parts by mass or more, more preferably 10 parts by mass or more, based on 100 parts by mass of the acrylic resin. When the content is 5 parts by mass or more, there is a tendency to easily achieve the purpose of further improving charge and discharge capacity and cycle characteristics. On the other hand, the content is preferably 50 parts by mass or less, more preferably 40 parts by mass or less. When the content is 50 parts by mass or less, a proportion of a sulfur-containing structure in the sulfur-based active material does not relatively decrease, and there is a tendency to easily achieve the purpose of further improving charge and discharge capacity and cycle characteristics.

(Other materials)

The raw material may appropriately comprise other materials commonly used in this field, as desired.

<Production of sulfur-based active material>

In the present invention, the sulfur-based active material can be produced by baking a raw material obtained by mixing an acrylic resin, sulfur, and an iron compound comprising a divalent or trivalent iron ion.

(Step (1))

The step (1) is a step of mixing an acrylic resin, sulfur, and an iron compound comprising a divalent or trivalent iron ion to obtain a raw material for baking. The mixing is not particularly limited as long as these components are sufficiently mixed. In the present invention, examples as a preferred mixing method can at least include mixing by a WET method with a solvent or mixing by a DRY method without a solvent, which will be mentioned below.

[WET method]

In the present invention, the WET method comprises, for preparation of a raw material,

(1-a-1) adding the acrylic resin and the iron compound comprising a divalent or trivalent iron ion to an organic solvent and mixing them to obtain a liquid mixture;
(1-a-2) removing the organic solvent from the liquid mixture to obtain a dry mixture; and
(1-a-3) mixing the dry mixture and the sulfur.

In the substep (1-a-1), the method of adding the acrylic resin and the iron compound comprising a divalent or trivalent iron ion to the organic solvent is not particularly limited as long as the liquid mixture can be obtained by mixing them. For example, (1) the acrylic resin and the iron compound comprising a divalent or trivalent iron ion may be simultaneously added to the organic solvent and mixed, (2) the acrylic resin may be added to the organic solvent and mixed, and then the iron compound comprising a divalent or trivalent iron ion may be further added and mixed, or (3) the iron compound comprising a divalent or trivalent iron ion may be added to the organic solvent and mixed, and then the acrylic resin may be further added and mixed.

In the substep (1-a-1), as the organic solvent, an organic solvent commonly used in this field can be used, examples of which include, for example, N-methyl-2-pyrrolidone, N,N-dimethylformaldehyde, alcohol, hexane, water, acetone, ethers such as tetrahydrofuran, etc., and the like. Moreover, as the organic solvent, one that dissolves the acrylic resin is preferable. This is because it contributes to a good mixing. One or more kinds of these solvents can be used.

The mixing of the acrylic resin and/or the iron compound comprising a divalent or trivalent iron ion with the organic solvent can be performed by stirring them in a container such as, for example, a beaker and the like.

In the substep (1-a-2), the removal of the organic solvent can be performed by a conventional method. For example, the removal can be performed by subjecting the liquid mixture to a drying method such as drying by heating, drying under reduced pressure, drying by heating under reduced pressure, and the like.

The dry mixture thus obtained is preferably pulverized before being subjected to the next step. This is because, in this way, it can be expected that the mixing in the substep (1-a-3) will be performed more appropriately. The pulverization can be performed by a conventional method, for example, using a cutter mill or the like. In particular, fine pulverization is preferably performed using a freezing pulverizer after coarse pulverization with a cutter mill.

Regarding the pulverized product, a preferred particle size is, in terms of median diameter, 1 $\mu$m or more, more preferably greater than 1 $\mu$m, further preferably greater than 2 $\mu$m, further preferably greater than 3 $\mu$m, further preferably greater than 4 $\mu$m. Moreover, the median diameter is preferably 40 $\mu$m or less, more preferably less than 40 $\mu$m, further preferably less than 30 $\mu$m, further preferably less than 20 $\mu$m, further preferably less than 15 $\mu$m, further preferably less than 10 $\mu$m. The median diameter is preferably within the above-described ranges from the viewpoint of the effects of the present invention. The median diameter can be measured by a method described in Examples section below.

In the substep (1-a-3), the mixing of the dry mixture and sulfur can be performed by a conventional method, examples of which can include, for example, a method of mixing them using a blender, and the like.

[DRY method]

In the present invention, the DRY method comprises, for preparation of a raw material,
(1-b) mixing the acrylic resin, the sulfur, and the iron compound comprising a divalent or trivalent iron ion in powder state.

Here, the powder refers to a state where each material that is solid has been made fine enough to be suitable for mixing for the purpose of the present invention. Regarding a particle that constitutes the powder, a size of such particle is not particularly limited as long as the mixing is appropriately performed, but it is, in median diameter, usually within a range of 1 $\mu$m or more and 40 $\mu$m or less, for example. The size of the particle is preferably greater than 1 $\mu$m, more preferably greater than 2 $\mu$m, further preferably greater than 3 $\mu$m, further preferably greater than 4 $\mu$m, while preferably 40 $\mu$m or less, more preferably less than 40 $\mu$m, more preferably less than 30 $\mu$m, further preferably less than 20 $\mu$m, further preferably less than 15 $\mu$m, further preferably less than 10 $\mu$m, rom the viewpoint of the effects of the present invention. The median diameter can be measured by a method described in Examples section below.

The mixing can be performed by a conventional method, for example, in the same manner as the mixing in the above-described substep (1-a-3).

In both the WET method and the DRY method, it is desirable to sufficiently mix raw materials in advance. Moreover, when conductive carbon materials and the like are added to the raw materials, these additives may also be mixed in advance of baking so as to be included in the raw materials beforehand.

The raw materials thus obtained may be used as they are in the next step (2), or if desired, they can be formed into pellets and used in the step (2).

(Step (2))

The step (2) is a step of baking the raw materials as obtained above. The baking of the raw materials can be performed by a conventional method, for example, by heating the raw materials at a predetermined temperature rising rate until reaching a predetermined temperature, maintaining them at the predetermined temperature for a predetermined time, and then cooling them naturally.

[Non-oxidizing atmosphere]

The baking is preferably performed under a non-oxidizing atmosphere. The non-oxidizing atmosphere refers to an atmosphere that does not substantially contain oxygen, and is adopted to suppress oxidative deterioration and excessive pyrolysis of constituent components. Specifically, it refers to an inert gas atmosphere such as nitrogen, argon, and the like, a sulfur gas atmosphere, or the like. Thus, the denaturation is performed, for example, in a quartz tube under an inert gas atmosphere.

[Temperature rising rate]

The temperature rising rate is preferably within a range of, for example, 50°C/h or higher and 500°C/h or lower. The temperature rising rate is preferably higher than 50°C/h, more preferably higher than 100°C/h. On the other hand, the temperature rising rate is preferably lower than 500°C/h, more preferably lower than 400°C/h, further preferably lower than 300°C/h, further preferably lower than 200°C/h. When the temperature rising rate is within such a range, there is a tendency to easily achieve the purpose of improving charge and discharge capacity and cycle characteristics.

[Baking temperature/time]

A baking temperature refers to a temperature after completion of the temperature rising of the raw materials, the temperature being maintained for a certain period of time for baking the raw materials. The temperature is preferably in a range of higher than 250°C and lower than 550°C. When it is higher than 250°C, there is a tendency to avoid insufficient sulfurization reaction and prevent a decrease in charge and discharge capacity of the object. On the other hand, when it is lower than 550°C, there is a tendency that decomposition of the raw materials can be prevented and a decrease in yield and a decrease in charge and discharge capacity can be prevented. The temperature is more preferably higher than 300°C, further preferably higher than 350°C, further preferably higher than 380°C. On the other hand, the temperature is more preferably lower than 500°C, further preferably lower than 480°C, further preferably lower than 450°C.

The baking temperature in the step (2) is preferably higher than the temperature at which the iron compound comprising a divalent or trivalent iron ion thermally decomposes, from the viewpoint of the effects of the present invention.

A time for maintaining the baking temperature may be appropriately set according to types of raw materials, a baking temperature, etc., but is preferably 1 hour or more and 6 hours or less, for example. When it is 1 hour or more, there is a tendency that the baking can be sufficiently advanced, and when it is 6 hours or less, there is a tendency that excessive pyrolysis of the constituent components can be prevented. The time is preferably greater than 1 hour, more preferably greater than 1.5 hours. On the other hand, the time is preferably less than 6 hours, more preferably less than 4 hours.

[Device]

The baking can be performed using the device shown in FIG. 1, or can be performed using a continuous device such as, for example, a twin-screw extruder and the like. When the continuous device is used, there is an advantage that the sulfur-based active material can be continuously produced through a series of operations such as also performing baking while kneading, pulverizing, and mixing the raw materials in the device, and the like.

(Step of removing residue)

In a processed product obtained after baking, unreacted sulfur and the like which are precipitated from the sulfur sublimated during baking and then cooled remain behind. It is desirable to remove these residues as much as possible because they may cause deterioration of cycle characteristics. Removal of the residues can be performed according to a conventional method such as, for example, drying by heating under reduced pressure, drying with hot air, washing with a solvent, etc.

(Pulverization/classification)

The obtained sulfur-based active material can be pulverized to have a predetermined particle size and classified, in order to obtain a particle having a size suitable for producing an electrode. A preferred particle size distribution of the particle is about 1 $\mu$m or more and 40 $\mu$m or less in terms of median diameter, from the viewpoint of the effects of the present invention. The median diameter is preferably greater than 1 $\mu$m, more preferably greater than 2 $\mu$m, further preferably greater than 3 $\mu$m, further preferably greater than 4 $\mu$m. Moreover, the median diameter is preferably less than 40 $\mu$m, more preferably less than 30 $\mu$m, further preferably less than 20 $\mu$m, further preferably less than 15 $\mu$m, further preferably less than 10 $\mu$m. The median diameter can be measured by a method described in Examples section below.

Besides, in the baking method using the twin-screw extruder as described above, pulverization of the produced sulfur-based active material can be performed, at the same time as production of the sulfur-based active material, by shearing during kneading.

<Sulfur-based active material>

The sulfur-based active material as obtained above will be described below. The sulfur-based active material as obtained above comprises a sulfur-modified acrylic resin (acrylic resin sulfide) and iron disulfide, and it is an active material, in which they are compounded, and at least comprises carbon, sulfur, and iron as constituent elements. A sulfur content, a carbon content, and a hydrogen content which are shown below are amounts of each element contained in the sulfur-based active material. Moreover, the fact that the obtained sulfur-based active material comprises iron disulfide is based on comparison with a peak profile of a diffraction intensity of iron disulfide (iron pyrite) which is obtained by X-ray diffraction measurement.

(Sulfur content)

In the sulfur-based active material thus obtained, a preferred range of an amount of sulfur is greater than 40.0% by mass, more preferably greater than 45.0% by mass, further preferably greater than 50.0% by mass, further preferably greater than 55.0% by mass in the sulfur-based active material. However, when a conductive carbon material is compounded, the effects of improving charge and discharge capacity and cycle characteristics may be expected even if the sulfur content is somewhat lower, due to an influence of carbon that constitutes the conductive carbon material. A sulfur content in such a case may be lower than the amounts of sulfur as mentioned above by about 5.0% by mass.

(Carbon content)

The carbon content is preferably greater than 5.0 and less than 30.0% by mass from the viewpoint of the effects of the present invention. The content is more preferably greater than 6.0% by mass, further preferably greater than 7.0% by mass, further preferably greater than 8.0% by mass, further preferably greater than 8.5% by mass. On the other hand, the content is more preferably less than 29.0% by mass, further preferably less than 25.0% by mass.

(Total content of sulfur and carbon)

In addition, a total content of carbon and sulfur in the sulfur-based active material is preferably greater than 60% by mass, more preferably greater than 65% by mass. On the other hand, the total content is preferably less than 95% by mass, more preferably less than 90% by mass, further preferably less than 85% by mass.

(Hydrogen content)

Hydrogen (H) in the acrylic resin is reacted with sulfur by baking to become a hydrogen sulfide, and then it is reduced from the sulfide. Therefore, the hydrogen content of the sulfur-based active material is preferably less than 1.00% by mass, more preferably less than 0.70% by mass, further preferably less than 0.50% by mass. When the content is less than 1.00% by mass, there is a tendency that baking (sulfurization reaction) is sufficient. Therefore, in this case, the charge and discharge capacity tends to be improved.

(True density)

The true density of the sulfur-based active material is preferably greater than 2.4 $g/cm^3$ and less than 3.6 $g/cm^3$ from the viewpoint of the effects of the present invention. The true density is more preferably greater than 2.5 $g/cm^3$, further preferably 2.6 $g/cm^3$ or more, further preferably greater than 2.6 $g/cm^3$. On the other hand, the true density is more preferably less than 3.5 $g/cm^3$, further preferably less than 3.2 $g/cm^3$, further preferably less than 3.1 $g/cm^3$. In the present invention, the true density is a density when only a volume occupied by the sulfur-based active material itself is used as a volume for density calculation, and specifically, it is calculated by a method described in Example section.

<Lithium-ion secondary battery>

The sulfur-based active material of the present invention can be used as an electrode active material for a lithium-ion secondary battery, i.e., as a positive electrode active material or a negative electrode active material. That is, an electrode for a lithium-ion secondary battery can be produced in the same manner as in a case of producing an electrode for a general lithium-ion secondary battery, except that the sulfur-based active material is used, further, a lithium-ion secondary battery can be produced in the same manner as in a case of producing a general lithium-ion secondary battery, except that the electrode for the lithium-ion secondary battery is used. The lithium-ion secondary battery thus produced has a large charge and discharge capacity and excellent cycle characteristics.

1. Using a sulfur-based active material as a positive electrode active material

The lithium-ion secondary battery of the present invention can be produced using a negative electrode and an electrolyte, and further, if desired, a member such as a separator and the like, in addition to a positive electrode comprising the above-described sulfur-based active material (positive electrode active material), according to a conventional method.

(Positive electrode)

The positive electrode for the lithium-ion secondary battery can be produced in the same manner as in a case for a general positive electrode for a lithium-ion secondary battery, except that the above-described sulfur-based active material is used as a positive electrode active material. For example, the positive electrode is produced by mixing the sulfur-based active material in a particulate state with a conductive aid, a binder, and a solvent to prepare a paste-like positive electrode material, applying the positive electrode material to a current collector, and then drying it. As another method, the positive electrode can also be produced by, for example, kneading the sulfur-based active material together with a conductive aid, a binder, and a small amount of solvent using a mortar or the like and forming them into a film, followed by crimping it to a current collector using a press machine or the like.

[Conductive aid]

Examples of the conductive aid include, for example, Vapor Grown Carbon Fiber (VGCF), carbon powder, carbon black (CB), acetylene black (AB), Ketjen black (KB), graphite, or a fine powder of metal that is stable at a positive electrode potential such as aluminum, titanium, and the like. One or two or more kinds of these conductive aids can be used.

[Binder]

Examples of the binder include polyvinylidene fluoride (PolyVinylidene DiFluoride: PVDF), polytetrafluoroethylene (PTFE), a styrenebutadiene rubber (SBR), polyimide (PI), polyamideimide (PAI), carboxymethylcellulose (CMC), polyvinyl chloride (PVC), an acrylic resin, a methacrylic resin (PMA), polyacrylonitrile (PAN), a modified polyphenylene oxide (PPO), polyethylene oxide (PEO), polyethylene (PE), polypropylene (PP), and the like. One or more kinds of these binders can be used.

[Solvent]

Examples of the solvent include N-methyl-2-pyrrolidone, N,N-dimethylformaldehyde, alcohol, hexane, water, and the like. One or more kinds of these solvents can be used.

[Compounding amount]

A compounding amount of these materials constituting the positive electrode is not particularly limited, but, for example, 2 parts by mass or more and 100 parts by mass or less of a conductive aid, 2 parts by mass or more and 50 parts by mass or less of a binder, and an appropriate amount of a solvent are preferably compounded based on 100 parts by mass of the sulfur-based active material.

[Current collector]

As the current collector, those generally used for a positive electrode for a lithium-ion secondary battery may be used. For example, examples of the current collector include one composed of an aluminum foil, an aluminum mesh, a punched aluminum sheet, an expanded aluminum sheet, a stainless steel foil, a stainless steel mesh, a punched stainless steel sheet, an expanded stainless steel sheet, a nickel foam, a nickel non-woven fabric, a copper foil, a copper mesh, a punched copper sheet, an expanded copper sheet, a titanium foil, a titanium mesh, a carbon non-woven fabric, a carbon woven fabric, or the like. Among them, a current collector composed of a carbon non-woven fabric or a carbon woven fabric made of carbon with a high degree of graphitization is appropriate as a current collector when the sulfur-based active material of the present invention is used as a positive electrode active material because the current collector does not contain hydrogen and has a low reactivity with sulfur. As a raw material for carbon fiber with a high degree of graphitization, various pitches (i.e., by-products of petroleum, coal, and coal tar) used as materials for carbon fiber, a polyacrylonitrile fiber (PAN), and the like can be used. The current collector may be used alone, or two or more thereof may be used in combination.

(Negative electrode)

As the negative electrode material, a known metallic lithium, a carbon-based material such as graphite and the like, a silicon-based material such as a silicon thin film and the like, and an alloy-based material such as copper-tin, cobalt-tin, and the like can be used. When a lithium-free material, such as, for example, a carbon-based material, a silicon-based material, an alloy-based material, and the like, among the above-described negative electrode materials, is used as the negative electrode material, it is advantageous that a short circuit between the positive and negative electrodes due to generation of dendrites is unlikely to occur. However, when these lithium-free negative electrode materials are used in combination with the positive electrode of the present invention, neither the positive electrode nor the negative electrode contain lithium. For this reason, a lithium pre-doping process of inserting lithium into either or both of the negative electrode and the positive electrode in advance is required. As a method of pre-doping lithium, a known method may be followed. For example, when doping lithium into the negative electrode, there are a method of inserting lithium by an electrolytic doping method of assembling a half cell using metallic lithium as a counter electrode and electrochemically doping lithium and a method of inserting lithium by a pasting pre-doping method of attaching a metallic lithium foil to the electrode, then leaving it in an electrolyte, and doping it by utilizing diffusion of lithium into the electrode. Moreover, when pre-doping lithium into the positive electrode, the above-described electrolytic doping method can be used. As the lithium-free negative electrode materials, silicon-based materials that are negative electrode materials with a high capacity are particularly preferable, and among them, a thin-film silicon, which is thin in electrode thickness and thus is advantageous in terms of capacity per volume, is more preferable.

(Electrolyte)

As the electrolyte used for the lithium-ion secondary battery, those obtained by dissolving an alkali metal salt that is an electrolyte in an organic solvent can be used. As the organic solvent, it is preferable to use at least one selected from non-aqueous solvents such as ethylene carbonate, propylene carbonate, dimethyl carbonate, diethyl carbonate, ethyl methyl carbonate, dimethyl ether, $\gamma$-butyrolactone, acetonitrile, and the like. As the electrolyte, $LiPF_6$, $LiBF_4$, $LiAsF_6$, $LiCF_3SO_3$, LiI, $LiClO_4$, and the like can be used. A concentration of the electrolyte may be about 0.5 mol/L or more and 1.7 mol/L or less. Besides, the electrolyte is not limited to one in a liquid state. For example, when the lithium-ion secondary battery is a lithium polymer secondary battery, the electrolyte is in a solid state (for example, a polymer gel state).

(Separator)

The lithium-ion secondary battery may comprise a member such as a separator and the like, in addition to the negative electrode, positive electrode, and electrolyte as mentioned above. The separator is interposed between the positive electrode and the negative electrode, permits ion migration between the positive electrode and the negative electrode, and prevents an internal short circuit between the positive electrode and the negative electrode. If the lithium-ion secondary battery is of a sealed type, the separator is required to have a function of retaining the electrolyte. As the separator, it is preferable to use a thin and microporous or non-woven fabric film made of polyethylene, polypropylene, polyacrylonitrile, aramid, polyimide, cellulose, glass, or the like.

(Shape)

A shape of the lithium-ion secondary battery is not particularly limited, and various shapes such as a cylindrical shape, a stacked shape, a coin shape, a button shape, and the like can be used.

2. Using a sulfur-based active material as a negative electrode active material

The lithium-ion secondary battery of the present invention can be produced using a positive electrode and an electrolyte, and further, if desired, a member such as a separator and the like, in addition to a negative electrode comprising the above-described sulfur-based active material (negative electrode active material), according to a conventional method.

(Negative electrode)

The negative electrode for the lithium-ion secondary battery can be produced in the same manner as in a case for a general negative electrode for a lithium-ion secondary battery, except that the above-described sulfur-based active material is used as a negative electrode active material. For example, the negative electrode is produced by mixing the sulfur-based active material in a particulate state with a conductive aid, a binder, and a solvent to prepare a paste-like negative electrode material, applying the negative electrode material to a current collector, and then drying it. As another method, the negative electrode can also be produced by, for example, kneading the sulfur-based active material together with a conductive aid, a binder, and a small amount of solvent using the mortar or the like and forming them into a film, and then crimping it to a current collector using the press machine or the like.

As the conductive aid, binder, and solvent, the same ones as in the case of using the sulfur-based active material as the positive electrode active material can be used, and the same can also be applied to the current collector.

(Positive electrode)

The positive electrode material is not particularly limited as long as it is, for example, a transition metal oxide or solid solution oxide that contains lithium, or a substance capable of electrochemically absorbing and releasing lithium ions. Examples of the transition metal oxide that contain lithium include, for example, a Li-Co-based composite oxide such as $LiCoO_2$ and the like, a Li-Ni-Co-Mn-based composite oxide such as $LiNi_xCo_yMn_zO_2$ and the like, a Li-Ni-based composite oxide such as $LiNiO_2$ and the like, a Li-Mn-based composite oxide such as $LiMn_2O_4$ and the like, etc. Examples of the solid solution oxide include, for example, $Li_aMn_xCo_yNi_zO_2$ ($1.150 \leq a \leq 1.430$, $0.450 \leq x \leq 0.600$, $0.100 \leq y \leq 0.150$, $0.200 \leq z \leq 0.280$), $LiMn_xCo_yNi_zO_2$ ($0.300 \leq x \leq 0.850$, $0.100 \leq y \leq 0.300$, $0.100 \leq z \leq 0.300$), $LiMn_{1.5}Ni_{0.5}O_4$, and the like. These compounds may be used alone, or multiple kinds thereof may be mixed and used.

As for the electrolyte, the separator, and the shape of lithium-ion secondary battery, the same ones as in the case of using the sulfur-based active material as the positive electrode active material can be used.

EXAMPLES

Although the present invention will be described based on Examples, it is not limited to Examples.

Various chemicals used in Examples and Comparative examples are collectively shown below. Various chemicals were purified according to a conventional method as necessary.

<Materials used in tests>

Acrylic resin 1: Spherical acrylic resin made of a homopolymer of methyl methacrylate (TECHPOLYMER MB-4 manufactured by Sekisui Kasei Co., Ltd., particle size: 4 $\mu$m)
Iron compound 1 (organic acid salt): Iron (II) oxalate dihydrate (iron (II) oxalate dihydrate manufactured by KANTO CHEMICAL CO., INC., guaranteed reagent)
Iron compound 2 (organic acid salt): Iron (II) acetate (iron (II) acetate manufactured by KANTO CHEMICAL CO., INC.)
Sulfur: Precipitated sulfur manufactured by Tsurumi Chemical Industry Co., Ltd.
Organic solvent (WET method): Acetone (acetone manufactured by YONEYAMA YAKUHIN KOGYO CO., LTD., special grade)

Production example 1 (Fine pulverization of iron compound)

Before subjecting the iron compound to a kneading step, the iron compound was pulverized in advance, as necessary, using a freezing pulverizer (JFC-2000 manufactured by Japan Analytical Industry Co., Ltd.), a cutter mill (Free Speed Mill FS-20 manufactured by Labonect), or a dry jet mill (Nano Jetmizer NJ-30 manufactured by Aishin Nano Technologies CO., LTD), as shown in Table 1 below.

Table 1

|  | Raw material | Pulverization condition | Median diameter ($\mu$m) | Specific surface area (m$^2$/g) |
|---|---|---|---|---|
| Iron compound 1-0 | Iron compound 1 | No pulverization | 12.80 | 1.0 |
| Iron compound 1-F5 | Iron compound 1 | Freezing pulverizer, processing time: 5 minutes | 2.60 | 5.9 |
| Iron compound 1-F10 | Iron compound 1 | Freezing pulverizer, processing time: 10 minutes | 2.10 | 6.6 |

(continued)

|  | Raw material | Pulverization condition | Median diameter ($\mu$m) | Specific surface area (m$^2$/g) |
|---|---|---|---|---|
| Iron compound 1-C | Iron compound 1 | Cutter mill, 25,000 rpm, processing time: 20 seconds | 4.29 | 2.8 |
| Iron compound 1-J | Iron compound 1 | Dry jet mill, pulverizing pressure: 1.1 MPa, processing time: 2 g/min | 3.50 | 4.5 |
| Iron compound 2-0 | Iron compound 2 | No pulverization | 13.00 | 1.6 |
| Iron compound 2-F10 | Iron compound 2 | Freezing pulverization, processing time: 10 minutes | 3.00 | 4.2 |

Production example 2 (Preparation of raw material by WET method)

According to the compounding in Table 3, an acrylic resin was added to an organic solvent and thoroughly mixed, and then an iron compound was further added to the mixture to obtain a liquid mixture. Next, the liquid mixture was removed of the organic solvent and pulverized using a cutter mill (LAB MILL manufactured by OSAKA CHEMICAL Co., Ltd.) to obtain a dry mixture.

The dry mixture thus obtained was mixed with sulfur using a blender to obtain a raw material for baking.

Besides, in Comparative example 2, an acrylic resin 1 and sulfur were mixed using the blender to obtain a raw material for baking, and in Comparative example 3, an iron compound 1 and sulfur were mixed using the blender to obtain a raw material for baking.

Example 1

<Production of sulfur-based active material>

(Raw material for baking)

As described in Table 3, the raw material prepared by the WET method was used as the raw material for baking.

(Reaction device)

A reaction device 1 shown in FIG. 1 was used for baking raw materials. The reaction device 1 comprises a reaction vessel 3 having an outer diameter of 60 mm, an inner diameter of 50 mm, and a height of 300 mm, made of a bottomed cylindrical quartz glass, for accommodating and baking a raw material 2, a silicone lid 4 that closes the upper opening of the reaction vessel 3, one alumina protection tube 5 ("Alumina SSA-S" manufactured by NIKKATO CORPORATION, outer diameter: 4 mm, inner diameter: 2 mm, length: 250 mm) that penetrates the lid 4, a pair of gas introduction tube 6 and gas discharge tube 7 (for both, "Alumina SSA-S" manufactured by NIKKATO CORPORATION, outer diameter: 6 mm, inner diameter: 4 mm, length: 150 mm), and an electric furnace 8 (crucible furnace, opening width: $\varphi$80 mm, heating height: 100 mm) for heating the reaction vessel 3 from the bottom side.

The alumina protection tube 5 is formed to have a length such that the lower portion from the lid 4 reaches the raw material 2 accommodated in the bottom of the reaction vessel 3, and a thermocouple 9 is inserted inside the alumina protection tube 5. The alumina protection tube 5 is used as a protection tube for the thermocouple 9. The tip of the thermocouple 9 is inserted into the raw material 2 and functions to measure a temperature of the raw material 2, while being protected by the closed tip of the alumina protection tube 5. An output of the thermocouple 9 is input to a temperature controller 10 of the electric furnace 8, as indicated by the solid arrow in the figure, and the temperature controller 10 functions to control a heating temperature of the electric furnace 8, based on this input from the thermocouple 9.

The gas introduction tube 6 and the gas discharge tube 7 are formed such that their lower ends protrude downward from the lid 4 by 3 mm. Ar (argon) gas is continuously supplied to the gas introduction tube 6 from a gas supply system (not shown). Moreover, the gas discharge tube 7 is connected to a trap tank 12 accommodating a sodium hydroxide aqueous solution 11. An exhaust gas to exit from the reaction vessel 3 through the gas discharge tube 7 to the outside once passes through the sodium hydroxide aqueous solution 11 in the trap tank 12 and then is released to the outside. Therefore, even if the exhaust gas contains a hydrogen sulfide gas generated by a vulcanization reaction, the hydrogen sulfide gas is neutralized with the sodium hydroxide aqueous solution and removed from the exhaust gas.

(Baking step)

First, with the raw material 2 being accommodated in the bottom of the reaction vessel 3, while continuously supplying Ar gas from the gas supply system at a flow rate of 80 mL/min, heating by the electric furnace 8 was started 30 minutes after the start of supply. This step was performed at a temperature rising rate of 150°C/h. Then, when the temperature of the raw material reached the baking temperature (400°C) in Table 3, baking was performed for 2 hours while maintaining the baking temperature. Next, while adjusting the flow rate of Ar gas, the temperature of the reaction product was naturally cooled to 25°C under an Ar gas atmosphere, and then the product was taken out from the reaction vessel 3.

(Removal of unreacted sulfur)

In order to remove unreacted sulfur (sulfur in a free state) remaining in the product after the baking step, the following step was performed. That is, the product was pulverized in a mortar, and 2 g of the pulverized product was placed in a glass tube oven and heated at 250°C for 3 hours while being vacuum-sucked to obtain a sulfur-based active material in which unreacted sulfur was removed (or which comprises only a trace amount of unreacted sulfur). The temperature rising rate was set to 10°C/min.

(Classifying step)

In order to remove coarse particles from the baked material, the baked material was classified using a 32 $\mu$m mesh stainless steel sieve to obtain a sulfur-based active material.

<Production of lithium-ion secondary battery>

A lithium-ion secondary battery was produced as follows.

(Positive electrode)

The sulfur-based active material obtained above was used as an active material, acetylene black was used as a conductive aid, and the acrylic resin was used as a binder. They were weighed so that a proportion of the active material:conductive aid:binder becomes 90:5:5 (% by mass), put in a container, stirred and mixed with a planetary centrifugal mixer (ARE-250 manufactured by THINKY CORPORATION) using milliQ water for a dispersant to produce a uniform slurry. The slurry produced was applied onto a 20 $\mu$m aluminum foil using an applicator with a slit width of 60 $\mu$m, and compressed using a roll press to obtained an electrode, which was then heated at 120°C for 3 hours, dried, and then punched to $\varphi$11 to obtain an electrode (positive electrode). Then, a mass of the electrode was measured to calculate an amount of an active material in the electrode from the above-mentioned ratio.

(Negative electrode)

As the negative electrode, a metallic lithium foil (disk-shaped with a diameter of 14 mm and a thickness of 500 $\mu$m, manufactured by Honjo Metal Co., Ltd.) was used.

(Electrolyte)

As the electrolyte, a nonaqueous electrolyte in which $LiPF_6$ was dissolved in a mixed solvent of ethylene carbonate and diethyl carbonate was used. Ethylene carbonate and diethyl carbonate were mixed at a volume ratio of 1:1. A concentration of $LiPF_6$ in the electrolyte was 1.0 mol/L.

(Lithium-ion secondary battery)

A coin battery was produced using the above-described positive electrode and negative electrode. In detail, in a dry room, a separator (Celgard 2400 manufactured by Celgard LLC, a polypropylene microporous membrane with a thickness of 25 $\mu$m) and a glass non-woven fabric filter (440 $\mu$m thickness, GA100 manufactured by ADVANTEC) were clamped between the positive electrode and the negative electrode to form an electrode body battery. This electrode body battery was accommodated in a battery case made of stainless steel (member for CR2032 type coin battery, manufactured by Hohsen Corp.). The above-described electrolyte was injected into the battery case. The battery case was sealed with a caulking machine to obtain a lithium-ion secondary battery of Example 1.

Examples 2 to 5 and Comparative examples 1 to 4

Each raw material, sulfur-based active material, and lithium-ion secondary battery were produced in the same manner as in Example 1 except that appropriate changes were made according to Table 3.

<Measurement of discharge capacity and capacity retention rate>

Each coin-type lithium-ion secondary battery produced in Examples and Comparative examples was charged and discharged at a current value corresponding to 50 mA per 1 g of a positive electrode active material from the first time to the ninth time and charged and discharged at a current value corresponding to 100 mA per 1 g of a positive electrode active material from the 10th time to the 30th time, under a condition of a test temperature at 30°C. A discharge termination voltage was set to 1.0V, and a charge termination voltage was set to 3.0V. While charging and discharging were repeated, the 10th and 30th battery discharge capacities (mAh) were observed.

The second discharge capacity (mAh/g) was defined as an initial capacity. The larger the initial capacity is, the larger the charge and discharge capacity of the lithium-ion secondary battery is, which can be evaluated to be preferable. Moreover, from the 10th discharge capacity $DC_{10}$ (mAh/g) and the 30th discharge capacity $DC_{30}$ (mAh/g), a capacity retention rate (%) was calculated by the following equation (a):

$$\text{Capacity retention rate (\%)} = (DC_{30}/DC_{10}) \times 100 \text{ (a)}.$$

As described above, it can be said that the higher the capacity retention rate is, the more excellent the cycle characteristics of the lithium-ion secondary battery is.

<Elemental analysis>

Elemental analysis was performed on the sulfur-based active materials produced in Examples and Comparative examples.

For carbon, hydrogen, sulfur, and nitrogen, a mass ratio (%) in a total amount of sulfur-based active materials was calculated from a mass measured using a vario MICRO cube, a fully automatic elemental analyzer, manufactured by Elementar. The results are shown in Table 3.

<True Density>

The sulfur-based active materials produced in Examples and Comparative examples were subjected to thermogravimetry, and based on the measurement results obtained, each true density ($g/cm^3$) was calculated.

A device used for thermogravimetry is TGA Q500 manufactured by TA Instruments. A measurement condition was such that, after heating to 750°C under an Ar atmosphere, air was introduced to completely decompose a measurement sample. Then, an ash content ratio (% by weight) was calculated from a measured weight reduction rate (% by weight). It can be seen from the weight reduction rate of Comparative example 2 that the acrylic resin sulfide is completely decomposed, and from the weight reduction rate of Comparative example 3 that the amount of iron disulfide (FeS2) is reduced by 36% by weight. A true density of the acrylic resin sulfide in Comparative example 2 was 1.8 $g/cm^3$ (actual measurement value). On the other hand, 5.0 $g/cm^3$ (literature value) was adopted as a true density of iron disulfide in Comparative example 3. From the obtained values, a true density of the sulfur-based active material was calculated by the following equation.

True density of sulfur-based active material ($g/cm^3$) = (A+B)/(A/1.8+B/5.0)

A: Weight ratio (% by weight) of acrylic resin sulfide
B: Weight ratio (% by weight) of iron disulfide

The results are shown in Table 2 below.

Table 2

| | | Example | | | | | Comparative example | | | |
|---|---|---|---|---|---|---|---|---|---|---|
| | | 1 | 2 | 3 | 4 | 5 | 1 | 2 | 3 | 4 |
| Sulfur-based active material | | | | | | | | | | |
| Weight reduction rate (% by weight) | | 62 | 61 | 61 | 61 | 68 | 66 | 100 | 36 | 68 |
| Ash content ratio (% by weight) [100 - weight reduction rate] | | 38 | 39 | 40 | 39 | 32 | 34 | 0 | 64 | 32 |
| Weight ratio of iron disulfide (% by weight) [Ash content ratio $\times$ 100/(100 - 36)] | | 59 | 60 | 62 | 61 | 50 | 53 | 0 | 100 | 50 |
| Weight ratio of acrylic resin sulfide (% by weight) [100 - weight ratio of iron disulfide] | | 41 | 40 | 38 | 39 | 50 | 47 | 100 | 0 | 50 |
| True density (g/cm$^3$) | | 2.9 | 2.9 | 3.0 | 2.9 | 2.6 | 2.7 | 1.8 | 5.0 | 2.6 |

<Median diameter>

Using a laser diffraction/scattering type particle size distribution analyzer (particle size distribution analyzer PSA1090L manufactured by Anton Paar GmbH), a median diameter was calculated by measuring a volume basis cumulative 50% size (median diameter D50) using water as a dispersion medium.

Table 3

| | Comparative example | | Example | | | | | Comparative example | |
|---|---|---|---|---|---|---|---|---|---|
| | 1 | 4 | 1 | 2 | 3 | 4 | 5 | 2 | 3 |
| Sulfur-based active material | | | | | | | | | |
| Raw material | | | | | | | | | |
| Compounding (part by mass) | | | | | | | | | |
| Acrylic resin 1 | 100 | 100 | 100 | 100 | 100 | 100 | 100 | 100 | - |
| Iron compound 1-0 | 100 | - | - | - | - | - | - | - | 100 |
| Iron compound 1-F5 | - | - | 100 | - | - | - | - | - | - |
| Iron compound 1-F10 | - | - | - | 100 | - | - | - | - | - |
| Iron compound 1-C | - | - | - | - | 100 | - | - | - | - |
| Iron compound 1-J | - | - | - | - | - | 100 | - | - | - |
| Iron compound 2-0 | - | 100 | - | - | - | - | - | - | - |
| Iron compound 2-F10 | - | - | - | - | - | - | 100 | - | - |
| Sulfur | 600 | 600 | 600 | 600 | 600 | 600 | 600 | 300 | 300 |
| Mixing method | WET | WET | WET | WET | WET | WET | WET | - | - |
| Baking | | | | | | | | | |
| Baking temperature (°C) | 400 | 400 | 400 | 400 | 400 | 400 | 400 | 400 | 400 |
| Elemental analysis (%) | | | | | | | | | |
| C | 19.2 | 20.1 | 15.9 | 15.7 | 15.8 | 16.3 | 20.0 | 40.9 | 0.72 |

(continued)

| Baking | | | | | | | | | | |
|---|---|---|---|---|---|---|---|---|---|---|
| H | | 0.73 | 0.30 | 0.26 | 0.27 | 0.16 | 0.20 | 0.30 | 0.72 | 0.37 |
| N | | 0.00 | 0.00 | 0.00 | 0.00 | 0.00 | 0.00 | 0.00 | 0.00 | 0.00 |
| S | | 55.2 | 56.7 | 56.3 | 56.1 | 55.8 | 56.0 | 56.6 | 56.3 | 49.8 |
| True density(g/cm$^3$) | | 2.7 | 2.6 | 2.9 | 2.9 | 3.0 | 2.9 | 2.6 | 1.8 | 5.0 |
| Median size ($\mu$m) | | 9.2 | 4.8 | 6.8 | 7.4 | 6.2 | 4.8 | 4.6 | 5.9 | 7.2 |
| Evaluation on battery | | | | | | | | | | |
| Discharge capacity (mAh/g) | | | | | | | | | | |
| 1st ($DC_1$) | | 807 | 831 | 805 | 812 | 813 | 871 | 836 | 857 | 794 |
| 2nd ($DC_2$) | | 656 | 655 | 673 | 688 | 654 | 703 | 687 | 646 | 666 |
| 10th ($DC_{10}$) | | 541 | 535 | 600 | 632 | 561 | 563 | 625 | 579 | 427 |
| 30th ($DC_{30}$) | | 447 | 425 | 565 | 614 | 482 | 494 | 584 | 566 | 264 |
| Capacity retention rate (%) ($DC_2/DC_1$) | | 81 | 79 | 84 | 85 | 80 | 81 | 82 | 75 | 84 |
| Capacity retention rate (%) ($DC_{30}/DC_{10}$) | | 83 | 79 | 94 | 97 | 86 | 88 | 93 | 98 | 62 |
| $DC_{30}$ per unit volume (mAh/cm$^3$) | | 1220 | 1124 | 1635 | 1800 | 1433 | 1454 | 1542 | 1019 | 1320 |

<Embodiments>

Preferred embodiments are shown below.
[1] A method of producing a sulfur-based active material, the method comprising the steps of:

(1) mixing an acrylic resin, sulfur, and an iron compound comprising a divalent or trivalent iron ion to obtain a raw material, and
(2) baking the raw material;

wherein a median diameter of the iron compound is 12.00 $\mu$m or less, preferably 10.00 $\mu$m or less, more preferably 8.00 $\mu$m or less, further preferably 6.00 $\mu$m or less, further preferably 5.00 $\mu$m or less, further preferably 4.50 $\mu$m or less, further preferably 4.30 $\mu$m or less, further preferably 4.29 $\mu$m or less, further preferably 4.00 $\mu$m or less, further preferably 3.00 $\mu$m or less,
[2] The method of [1] above, wherein a content of the iron compound comprising a divalent or trivalent iron ion in the raw material is 50 parts by mass or more and 300 parts by mass or less, preferably greater than 60 parts by mass and less than 250 parts by mass, more preferably greater than 70 parts by mass and less than 200 parts by mass, further preferably greater than 75 parts by mass and less than 150 parts by mass, further preferably greater than 75 parts by mass and 100 parts by mass or less, based on 100 parts by mass of the acrylic resin,
[3] The method of [1] or [2] above, wherein the step (1) comprises the substeps of:

(1-a-1) adding the acrylic resin and the iron compound comprising a divalent or trivalent iron ion to an organic solvent and mixing them to obtain a liquid mixture;
(1-a-2) removing the organic solvent from the liquid mixture to obtain a dry mixture; and
(1-a-3) mixing the dry mixture and the sulfur,

[4] The method of [1] or [2] above, wherein the step (1) comprises the substep of:

(1-b) mixing the acrylic resin, the sulfur, and the iron compound comprising a divalent or trivalent iron ion in powder state,

[5] The method of any one of [1] to [4] above, wherein the baking temperature in the step (2) is higher than 250°C and lower than 550°C, preferably higher than 300°C and lower than 500°C, more preferably higher than 350°C and lower than 450°C, further preferably higher than 380°C and lower than 450°C,

[6] The method of any one of [1] to [5] above, wherein the baking temperature in the step (2) is higher than a temperature at which the iron compound comprising a divalent or trivalent iron ion thermally decomposes,

[7] The method of any one of [1] to [6] above, wherein a content of the sulfur in the raw material is greater than 50 parts by mass and less than 1000 parts by mass, preferably greater than 100 parts by mass and less than 900 parts by mass, more preferably greater than 300 parts by mass and less than 800 parts by mass, further preferably greater than 400 parts by mass and less than 700 parts by mass, further preferably greater than 500 parts by mass and less than 700 parts by mass, based on 100 parts by mass of the acrylic resin,

[8] The method of any one of [1] to [7] above, wherein the acrylic resin is at least one polymer selected from the group consisting of: a polymer obtained by polymerizing at least one monomer selected from the group consisting of acrylate compounds represented by the following formula (1); or a polymer obtained by polymerizing at least one monomer selected from the group consisting of acrylate compounds represented by the following formula (1) and at least one monomer selected from the group consisting of diacrylate compounds represented by the following formula (2),

$$CH_2=C (R^{11}) COOR^{12} \qquad (1)$$

(wherein, $R^{11}$ is a hydrogen atom or a methyl group, and $R^{12}$ is an alkyl group.)

$$CH_2=C (R^{21})COO\text{-}Y\text{-}OCO (R^{22}) C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom provided that when there are two or more of the ether bonds, any adjacent oxygen atoms always have two or more intervening carbon atoms between them.)

[9] The method of [8] above, wherein $R^{12}$ is an alkyl group having 1 or more and 6 or less carbon atoms, preferably 1 or more and 4 or less carbon atoms, Y is a linear hydrocarbylene group having 2 or more and 6 or less carbon atoms, preferably 2 or 3 carbon atoms, and in the hydrocarbylene group, the number of substituents is 1 or more and 4 or less, preferably 1 or 2, the number of carbon atoms of the alkyl group that is a substituent is 1 or more and 4 or less, preferably 1, and the number of ether bonds which the carbon skeleton constituting the hydrocarbylene group has is 1 or more and 2 or less,

[10] A method of producing an electrode, the method further comprising, after producing a sulfur-based active material by the method of producing a sulfur-based active material of any one of [1] to [9] above, the step of:

(3) producing an electrode using the sulfur-based active material by a conventional method,

[11] A method of producing a lithium-ion secondary battery, the method further comprising, after producing an electrode by the method of producing an electrode of [10] above, the step of:

(4) producing a lithium-ion secondary battery using the electrode by a conventional method,

[12] A sulfur-based active material,

the sulfur-based active material being obtained by baking a raw material comprising an acrylic resin, sulfur, and an iron compound comprising a divalent or trivalent iron ion,

the sulfur-based active material at least comprising carbon, sulfur, and iron as constituent elements,

wherein a median diameter of the iron compound is 12.00 $\mu$m or less, preferably 10.00 $\mu$m or less, more preferably 8.00 $\mu$m or less, further preferably 6.00 $\mu$m or less, further preferably 5.00 $\mu$m or less, further preferably 4.50 $\mu$m or less, further preferably 4.30 $\mu$m or less, further preferably 4.29 $\mu$m or less, further preferably 4.00 $\mu$m or less, further preferably 3.00 $\mu$m or less,

wherein the sulfur-based active material comprises iron disulfide, and

wherein a content of sulfur as a constituent element is 40.0% by mass or more, preferably 45.0% by mass or more, more preferably 50.0% by mass or more, further preferably 55.0% by mass or more,

[13] The sulfur-based active material of [12] above, wherein, in X-ray diffraction measurement using CuKα ray, a half-value width of a peak showing the maximum diffraction intensity within a range of $2\theta=33.04°$ ($\pm 1.0°$) is 0.20° or more,

[14] The sulfur-based active material of [12] or [13] above, wherein a true density is greater than 2.4 g/cm$^3$ and less

than 3.6 g/cm$^3$, preferably greater than 2.5 g/cm$^3$ and less than 3.5 g/cm$^3$, more preferably 2.6 g/cm$^3$ or more and less than 3.2 g/cm$^3$, further preferably greater than 2.6 g/cm and less than 3.2 g/cm, further preferably greater than 2.6 g/cm and less than 3.1 g/cm,

[15] The sulfur-based active material of any one of [12] to [14] above, wherein a content of the carbon is greater than 5.0% by mass and less than 30.0% by mass, preferably greater than 6.0% by mass and less than 29.0% by mass, more preferably greater than 7.0% by mass and less than 25.0% by mass, further preferably greater than 8.0% by mass and less than 25.0% by mass, further preferably greater than 8.5% by mass and less than 25.0% by mass,

[16] The sulfur-based active material of any one of [12] to [15] above, having a respective peak in each range of 2θ=25.5° (±1.0°), 28.51° (±1.0°), 33.04° (±1.0°), 37.07° (±1.0°), 40.76° (±1.0°), 47.42° (±1.0°), and 56.27° (±1.0°), in X-ray diffraction measurement using CuKα ray,

[17] The sulfur-based active material of any one of [12] to [16] above, wherein the acrylic resin is at least one polymer selected from the group consisting of: a polymer obtained by polymerizing at least one monomer selected from the group consisting of acrylate compounds represented by the following formula (1); or a polymer obtained by polymerizing at least one monomer selected from the group consisting of acrylate compounds represented by the following formula (1) and at least one monomer selected from the group consisting of diacrylate compounds represented by the following formula (2),

$$CH_2=C\,(R^{11})\,COOR^{12} \qquad (1)$$

(wherein, $R^{11}$ is a hydrogen atom or a methyl group, and $R^{12}$ is an alkyl group.)

$$CH_2=C\,(R^{21})COO\text{-}Y\text{-}OCO\,(R^{22})\,C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom provided that when there are two or more of the ether bonds, any adjacent oxygen atoms always have two or more intervening carbon atoms between them.)

[18] The sulfur-based active material of [17] above, wherein $R^{12}$ is an alkyl group having 1 or more and 6 or less carbon atoms, preferably 1 or more and 4 or less carbon atoms, Y is a linear hydrocarbylene group having 2 or more and 6 or less carbon atoms, preferably 2 or 3 carbon atoms, and in the hydrocarbylene group, the number of substituents is 1 or more and 4 or less, preferably 1 or 2, the number of carbon atoms of the alkyl group that is a substituent is 1 or more and 4 or less, preferably 1, and the number of ether bonds which the carbon skeleton constituting the hydrocarbylene group has is 1 or more and 2 or less,

[19] The sulfur-based active material of any one of [12] to [18] above, wherein a median diameter is 1 μm or more and 40 μm or less, preferably greater than 2 μm and less than 30 μm, more preferably greater than 3 μm and less than 20 μm, further preferably greater than 4 μm and less than 15 μm, further preferably greater than 4 μm and less than 10 μm,

[20] The sulfur-based active material of any one of [12] to [19] above, wherein a content of the iron compound comprising a divalent or trivalent iron ion in the raw material is 50 parts by mass or more and 300 parts by mass or less, preferably greater than 60 parts by mass and less than 250 parts by mass, more preferably greater than 70 parts by mass and less than 200 parts by mass, further preferably greater than 75 parts by mass and less than 150 parts by mass, further preferably greater than 75 parts by mass and 100 parts by mass or less, based on 100 parts by mass of the acrylic resin, and a content of the sulfur in the raw material is greater than 50 parts by mass and less than 1000 parts by mass, preferably greater than 100 parts by mass and less than 900 parts by mass, more preferably greater than 300 parts by mass and less than 800 parts by mass, further preferably greater than 400 parts by mass and less than 700 parts by mass, further preferably greater than 500 parts by mass and less than 700 parts by mass, based on 100 parts by mass of the acrylic resin.

REFERENCE SIGNS LIST

1. Reaction device
2. Raw material
3. Reaction vessel
4. Silicone lid
5. Alumina protection tube

6. Gas introduction tube
7. Gas discharge tube
8. Electric furnace
9. Thermocouple
10. Temperature controller
11. Sodium hydroxide aqueous solution
12. Trap tank

**Claims**

1. A method of producing a sulfur-based active material, the method comprising the steps of:

    (1) mixing an acrylic resin, sulfur, and an iron compound comprising a divalent or trivalent iron ion to obtain a raw material; and
    (2) baking the raw material,

    wherein the iron compound has a median diameter of 12.00 μm or less.

2. The method of claim 1, wherein a content of the iron compound comprising a divalent or trivalent iron ion in the raw material is 50 parts by mass or more and 300 parts by mass or less based on 100 parts by mass of the acrylic resin.

3. The method of claim 1 or 2, wherein the step (1) comprises the substeps of:

    (1-a-1) adding the acrylic resin and the iron compound comprising a divalent or trivalent iron ion to an organic solvent and mixing them to obtain a liquid mixture;
    (1-a-2) removing the organic solvent from the liquid mixture to obtain a dry mixture; and
    (1-a-3) mixing the dry mixture and the sulfur.

4. The method of claim 1 or 2, wherein the step (1) comprises the substep of:
   (1-b) mixing the acrylic resin, the sulfur, and the iron compound comprising a divalent or trivalent iron ion in powder state.

5. The method of any one of claims 1 to 4, wherein the baking temperature in the step (2) is higher than 250°C and lower than 550°C.

6. The method of any one of claims 1 to 5, wherein the baking temperature in the step (2) is higher than a temperature at which the iron compound comprising a divalent or trivalent iron ion thermally decomposes.

7. The method of any one of claims 1 to 6, wherein a content of the sulfur in the raw material is greater than 50 parts by mass and less than 1000 parts by mass based on 100 parts by mass of the acrylic resin.

8. The method of any one of claims 1 to 7, wherein the acrylic resin is at least one polymer selected from the group consisting of: a polymer obtained by polymerizing at least one monomer selected from the group consisting of acrylate compounds represented by the following formula (1); or a polymer obtained by polymerizing at least one monomer selected from the group consisting of acrylate compounds represented by the following formula (1) and at least one monomer selected from the group consisting of diacrylate compounds represented by the following formula (2).

$$CH_2=C(R^{11})COOR^{12} \qquad (1)$$

(wherein, $R^{11}$ is a hydrogen atom or a methyl group, and $R^{12}$ is an alkyl group.)

$$CH_2=C(R^{21})COO\text{-}Y\text{-}OCO(R^{22})C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom provided that when there are two or more of the ether bonds, any adjacent oxygen atoms always have two or more intervening carbon atoms between them.)

9. The method of claim 8, wherein $R^{12}$ is an alkyl group having 1 or more and 6 or less carbon atoms, Y is a linear hydrocarbylene group having 2 or more and 6 or less carbon atoms, and in the hydrocarbylene group, the number of substituents is 1 or more and 4 or less, the number of carbon atoms of the alkyl group that is a substituent is 1 or more and 4 or less, and the number of ether bonds which the carbon skeleton constituting the hydrocarbylene group has is 1 or more and 2 or less.

10. A method of producing an electrode, the method further comprising, after producing a sulfur-based active material by the method of producing a sulfur-based active material of any one of claims 1 to 9, the step of:
(3) producing an electrode using the sulfur-based active material by a conventional method.

11. A method of producing a lithium-ion secondary battery, the method further comprising, after producing an electrode by the method of producing an electrode of claim 10, the step of:
(4) producing a lithium-ion secondary battery using the electrode by a conventional method.

12. A sulfur-based active material,

the sulfur-based active material being obtained by baking a raw material comprising an acrylic resin, sulfur, and an iron compound comprising a divalent or trivalent iron ion,
the sulfur-based active material at least comprising carbon, sulfur, and iron as constituent elements,

wherein a median diameter of the iron compound is 12.00 $\mu$m or less,
wherein the sulfur-based active material comprises iron disulfide, and
wherein a content of sulfur as a constituent element is 40.0% by mass or more.

13. The sulfur-based active material of claim 12, wherein, in X-ray diffraction measurement using CuK$\alpha$ ray, a half-value width of a peak showing the maximum diffraction intensity within a range of $2\theta=33.04°$ ($\pm1.0°$) is 0.20° or more.

14. The sulfur-based active material of claim 12 or 13, wherein a true density is greater than 2.4 g/cm$^3$ and less than 3.6 g/cm$^3$.

15. The sulfur-based active material of any one of claims 12 to 14, wherein a content of the carbon is greater than 5.0% by mass and less than 30.0% by mass.

16. The sulfur-based active material of any one of claims 12 to 15, having a respective peak in each range of $2\theta=25.5°$ ($\pm1.0°$), 28.51° ($\pm1.0°$), 33.04° ($\pm1.0°$), 37.07° ($\pm1.0°$), 40.76° ($\pm1.0°$), 47.42° ($\pm1.0°$), and 56.27° ($\pm1.0°$), in X-ray diffraction measurement using CuK$\alpha$ ray.

17. The sulfur-based active material of any one of claims 12 to 16, wherein the acrylic resin is at least one polymer selected from the group consisting of: a polymer obtained by polymerizing at least one monomer selected from the group consisting of acrylate compounds represented by the following formula (1); or a polymer obtained by polymerizing at least one monomer selected from the group consisting of acrylate compounds represented by the following formula (1) and at least one monomer selected from the group consisting of diacrylate compounds represented by the following formula (2).

$$CH_2=C\ (R^{11})COOR^{12} \qquad (1)$$

(wherein, $R^{11}$ is a hydrogen atom or a methyl group, and $R^{12}$ is an alkyl group.)

$$CH_2=C(R^{21})COO\text{-}Y\text{-}OCO(R^{22})C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom provided that when there are two or more of the ether bonds, any adjacent oxygen atoms always have two or more carbon atoms between them.)

18. The sulfur-based active material of claim 17, wherein $R^{12}$ is an alkyl group having 1 or more and 6 or less carbon atoms, Y is a linear hydrocarbylene group having 2 or more and 6 or less carbon atoms, and in the hydrocarbylene group, the number of substituents is 1 or more and 4 or less, the number of carbon atoms of the alkyl group that is a substituent is 1 or more and 4 or less, and the number of ether bonds which the carbon skeleton constituting the hydrocarbylene group has is 1 or more and 2 or less.

19. The sulfur-based active material of any one of claims 12 to 18, wherein a median diameter is 1 $\mu$m or more and 40 $\mu$m or less.

20. The sulfur-based active material of any one of claims 12 to 19, wherein a content of the iron compound comprising a divalent or trivalent iron ion in the raw material is 50 parts by mass or more and 300 parts by mass or less based on 100 parts by mass of the acrylic resin, and a content of the sulfur in the raw material is greater than 50 parts by mass and less than 1000 parts by mass based on 100 parts by mass of the acrylic resin.

# FIG. 1

## INTERNATIONAL SEARCH REPORT

International application No.

**PCT/JP2023/010988**

### A. CLASSIFICATION OF SUBJECT MATTER

**H01M 4/58**(2010.01)i; **H01G 11/50**(2013.01)i; **H01M 4/36**(2006.01)i
FI:    H01M4/58; H01M4/36 B; H01G11/50

According to International Patent Classification (IPC) or to both national classification and IPC

### B. FIELDS SEARCHED

Minimum documentation searched (classification system followed by classification symbols)

H01M4/58; H01G11/50; H01M4/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2012/098614 A1 (KK TOYOTA JIDOSHOKKI) 26 July 2012 (2012-07-26) | 1-20 |
| A | JP 2022-517877 A (INDUSTRY-ACADEMIC COOPERATION FOUND. GYEONGSANG NATIONAL UNIVERSITY) 10 March 2022 (2022-03-10) | 1-20 |
| A | JP 2012-248549 A (KK TOYOTA JIDOSHOKKI) 13 December 2012 (2012-12-13) | 1-20 |
| A | JP 2013-54957 A (KK TOYOTA JIDOSHOKKI) 21 March 2013 (2013-03-21) | 1-20 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/010988**

| Patent document cited in search report | | | Publication date (day/month/year) | Patent family member(s) | | | Publication date (day/month/year) |
|---|---|---|---|---|---|---|---|
| WO | 2012/098614 | A1 | 26 July 2012 | JP | 2012-150948 | A | |
| JP | 2022-517877 | A | 10 March 2022 | US | 2022/0102705 | A1 | |
| | | | | WO | 2020/145504 | A1 | |
| | | | | KR | 10-2020-0085467 | A | |
| JP | 2012-248549 | A | 13 December 2012 | (Family: none) | | | |
| JP | 2013-54957 | A | 21 March 2013 | WO | 2013/035274 | A1 | |

Form PCT/ISA/210 (patent family annex) (January 2015)

**EP 4 496 034 A1**

**REFERENCES CITED IN THE DESCRIPTION**

**Patent documents cited in the description**

- JP 2020167144 A

- JP 2017088501 A